(19) **Europäisches Patentamt**
**European Patent Office**
**Office européen des brevets**

(11) **EP 1 944 221 A1**

(12) **EUROPEAN PATENT APPLICATION**
published in accordance with Art. 153(4) EPC

(43) Date of publication:
**16.07.2008 Bulletin 2008/29**

(51) Int Cl.:
**B62D 6/00** *(2006.01)*      **B62D 5/04** *(2006.01)*

(21) Application number: **06821948.4**

(22) Date of filing: **12.10.2006**

(86) International application number:
**PCT/JP2006/320790**

(87) International publication number:
**WO 2007/043694 (19.04.2007 Gazette 2007/16)**

(84) Designated Contracting States:
**DE FR GB**

(30) Priority: **14.10.2005 JP 2005299703**

(71) Applicant: **NSK Ltd.**
**Tokyo 141-8560 (JP)**

(72) Inventors:
• **YAMAMOTO, Satoshi**
**Maebashi-Shi, Gunma 371-8527 (JP)**

• **HARA, Takeshi**
**Maebashi-Shi, Gunma 371-8527 (JP)**

(74) Representative: **Hooiveld, Arjen Jan Winfried et al**
**Arnold & Siedsma**
**Sweelinckplein 1**
**2517 GK Den Haag (NL)**

(54) **CONTROLLER OF ELECTRIC POWER STEERING SYSTEM**

(57)    In a control unit of an electric power steering apparatus for driving a motor with a current command value and giving an assist torque to a steering mechanism by driving the motor, the control unit is provided with a motor angle sensor; a torque sensor; a relative steering angle detecting section for detecting a relative steering angle; a steering angular speed detecting section for detecting an angular speed of the motor; a vehicle speed determining section; a neutral point calculating section for determining that a vehicle is being driven straightly, and calculating by considering that the relative steering angle when the straight driving continues for not less than a predetermined time is a neutral point; and an absolute steering angle calculating section for calculating an absolute steering angle with a difference between the neutral point and the relative steering angle.

FIG.3

EP 1 944 221 A1

**Description**

TECHNICAL FIELD

The present invention relates to improvements of a control unit of an electric power steering apparatus which controls an assist amount of steering based on a steering torque and a vehicle speed, and more particularly to a control unit of an electric power steering apparatus, which has a steering angle usage function used for an operation, a compensation and the like of a steering assist command value and includes an algorithm function to estimate an absolute steering angle.

BACKGROUND ART

An electric power steering apparatus for energizing (assisting) a steering apparatus of an automobile or a vehicle with an assist load by a rotational force of a motor assists the driving force of the motor to a steering shaft or a rack shaft with the assist load through a transmission mechanism such as gears or a belt via a reduction machine. Such conventional electric power steering apparatus performs a feed-back control of a motor current in order to precisely generate an assist torque (steering auxiliary torque). The feed-back control adjusts a motor applying voltage so that a difference between a current command value and a detected motor current value may become small, and the adjustment of the motor applying voltage is generally performed by adjusting a duty ratio of a PWM (Pulse Width Modulation) control.

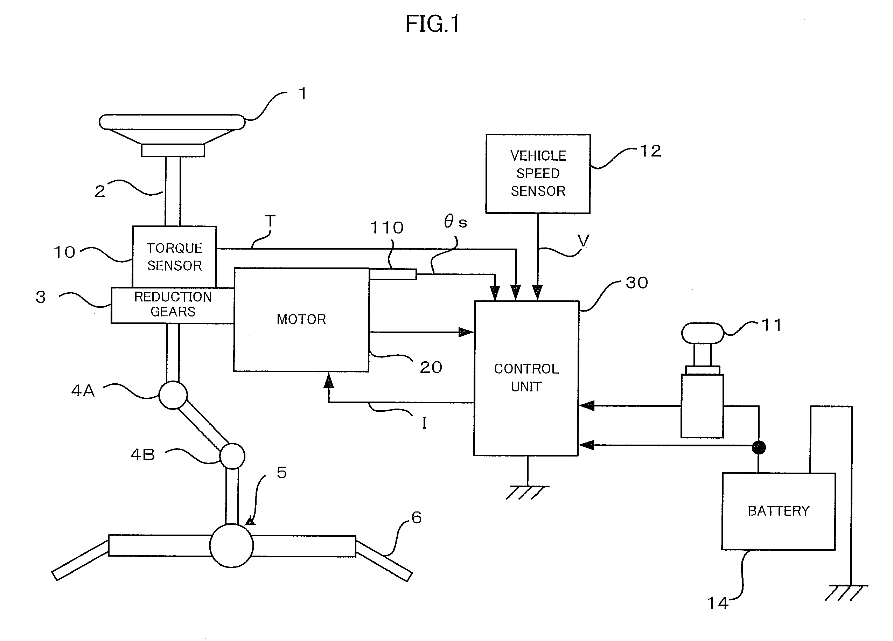

Here, a general configuration of an electric power steering apparatus shown in FIG. 1 will be described, wherein a steering shaft (column shaft) 2 of a steering wheel (handle) 1 is coupled to a tie rod 6 of steered wheels through reduction gears 3, universal joints 4A and 4B, and a pinion-rack mechanism 5. A torque sensor 10 for detecting a steering torque T of the steering wheel 1 is provided at the steering shaft 2, and a motor 20 with which the steering force of the steering handle 1 is assisted is coupled to the steering shaft 2 via the reduction gears 3. An electric power is supplied to a control unit 30 which controls the power steering apparatus, from a battery 14, and an ignition key signal is also inputted to the control unit 30 from an ignition key 11. Additionally, a motor angle sensor 110 for detecting a motor angle is disposed at the motor 20, and a motor angle $\theta_s$ from the motor angle sensor 110 is inputted to the control unit 30. The control unit 30 calculates a steering assist command value I of an assist command based on a steering torque T detected by the torque sensor 10 and a vehicle speed V detected by a vehicle speed sensor 12, and controls a current supplied to the motor 20 based on the calculated steering assist command value I.

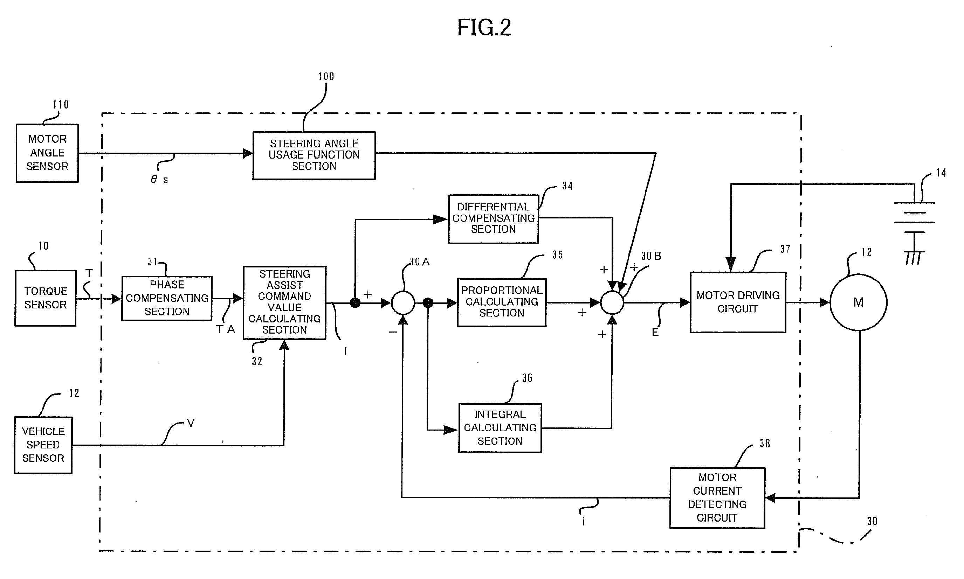

The control unit 30 is mainly composed of a CPU (MPU (Micro Processor Unit) and MCU (Micro Controller Unit) are also included), wherein a general function performed by a program inside the CPU is shown in FIG. 2. For example, a phase compensating section 31 does not show a phase compensator as independent hardware, but shows a phase compensating function performed by the CPU.

When the function and operation of the control unit 30 are described based on FIG. 2, the steering torque T detected and inputted by the torque sensor 10 is phase-compensated by the phase compensating section 31 in order to enhance a stability of a steering system, and the steering torque TA whose phase is compensated is inputted to a steering assist command value calculating section 32. Additionally, the vehicle speed V detected by the vehicle speed sensor 12 is also inputted to the steering assist command value calculating section 32. Furthermore, the motor angle $\theta_s$ outputted from the motor angle sensor 110 is inputted to a steering angle usage function section 100.

The steering assist command value calculating section 32 determines the steering assist command value I which is a control target value of the current supplied to the motor 20 based on the inputted steering torque TA and vehicle speed V. The steering assist command value I is inputted to a differential compensating section 34 of a feed-forward system for enhancing response speed, as well as inputted to a subtracting section 30A, and a deviation (I-i) of the subtracting section 30A is inputted to an integral calculating section 36 for improving the characteristics of a feed-back system, as well as inputted to a proportional calculating section 35. Along with the output of the differential compensating section 34, the outputs of the proportional calculating section 35 and the integral calculating section 36, and the output of the steering angle usage function section 100 are also inputted to an adding section 30B for adding, a current control value E which is an added result in the adding section 30B is inputted to a motor driving circuit 37 as a motor driving signal, and then the motor 20 is driven. Current i of the motor 20 is detected by a motor current detecting circuit 38, and then is feed-backed to the subtracting section 30A.

In such an electric power steering apparatus, in order to perform appropriate assist control, it is necessary to detect or estimate an absolute steering angle of an absolute value. Therefore, in Japanese Patent Application Laid-open No. 2003-276635 A (Patent Document 1), a relative steering angle is calculated using an angle signal of a motor, straight driving determination is performed using each wheel speed and steering torque, the relative steering angle of a handle when the vehicle is determined to be straight driving is estimated as a neutral point, and then an absolute steering angle is calculated from the estimated neutral point. Namely, in Patent Document 1, it will be described that the invention thereof includes a motor rotation angle detecting means for detecting a rotation angle of a motor, a neutral-point position detecting means for detecting a neutral-point position of a steering mechanism based on the rotational speed of wheels of a vehicle, and an absolute steering angle detecting means for detecting an absolute steering angle of the steering mechanism based on the neutral-point position detected by the neutral-point position detecting means and the rotation angle detected by the motor rotation angle detecting means.

However, in the electric power steering apparatus disclosed in the above-mentioned Patent Document 1, since the absolute steering angle detecting means is provided and wheel speed difference is used for determination of straight driving, a wheel speed sensor is essential and thus there is a problem that the apparatus cannot be applied to the vehicles without the wheel speed sensors.

## DISCLOSURE OF THE INVENTION

The present invention is made from the above circumstances, and an object of the present invention is to provide a control unit of an electric power steering apparatus, which can estimate a neutral point (neutral position) with a high precision and also calculate an absolute angle without a new signal from outside by calculating a relative steering angle of a handle, a steering angular speed, or a motor angular speed from a motor angle sensor.

The present invention relates to a control unit of an electric power steering apparatus for driving a motor via a current control section with a current command value calculated by a torque control section, and giving an assist torque to a steering mechanism by driving the motor, and the above object of the present invention is achieved by providing a motor angle sensor for detecting a motor angle, a torque sensor for detecting a steering torque applied to a steering shaft, a relative steering angle detecting section for detecting a relative steering angle $\theta_r$ of a steering from an output of the motor angle sensor, a steering angular speed detecting section for detecting an angular speed of the motor, a vehicle speed determining section for determining a vehicle speed, a neutral point calculating section for determining whether or not a vehicle is being driven straightly based on the steering angular speed, the steering torque and the vehicle speed, and calculating by considering that the relative steering angle $\theta_r$ when the straight driving continues for not less than a predetermined time is a neutral point, and an absolute steering angle calculating section for calculating an absolute steering angle with a difference between the neutral point obtained by the neutral point calculating section and the relative steering angle $\theta_r$.

The above object of the present invention is achieved more effectively by the neutral point calculating section setting a reliability coefficient which increases according to the vehicle speed and a straight driving duration if the straight driving duration becomes a first threshold or more under conditions of determining the straight driving of the vehicle to set a value "$D \cdot (\theta_r - \theta_{k-1})$" obtained by multiplying the deviation "$\theta_r - \theta_{k-1}$" between the neutral point angle $\theta_{k-1}$ corrected last time and the relative steering angle $\theta_r$ by the reliability coefficient D is added to the neutral point angle $\theta_{k-1}$ corrected last time as a new neutral point angle $\theta_k$; or by setting an estimated value reliability coefficient obtained by integrating the reliability coefficient D to decrease the reliability coefficient D to thereby reduce a corrected displacement of the neutral point angle $\theta_k$ when the estimated value reliability coefficient becomes a second threshold or more; or by performing the straight driving determination by adding a wheel rotational speed thereto.

## BRIEF DESCRIPTION OF THE DRAWINGS

In the accompanying drawings:

FIG. 1 is a structural view showing an outline of a typical electric power steering apparatus;
FIG. 2 is a block configuration diagram showing an example of a control unit;
FIG. 3 is a block configuration diagram showing an example of a control unit according to the present invention;
FIG. 4 is a block configuration diagram showing an example of a detailed configuration of a neutral point detecting section;
FIG. 5 is a block configuration diagram showing an example of the detailed configuration of the neutral point detecting section;
FIG. 6 is a view showing an example of a Dv-table;
FIG. 7 is a flow chart showing an operation example of the present invention; and
FIG. 8 is a block configuration diagram showing another example of the control unit according to the present invention.

## BEST MODE FOR CARRYING OUT THE INVENTION

In the present invention, a neutral point is estimated based on a relative steering angle obtained by calculating a relative steering angle of a handle in consideration of a gear ratio of a reduction section with a motor angle obtained from a motor angle sensor. Additionally, in the present invention, a vehicle speed, a steering torque and a steering angular speed are used for determination of the straight driving, wherein it is determined to be the straight driving now when conditions that can be determined to be the straight driving are satisfied and its state continues for predetermined time, and the neutral point is estimated based on the relative steering angle at that time. Highly precise and early neutral point estimation is made possible by further setting a straight-driving reliability coefficient and performing the estimation according to the reliability coefficient, and an absolute steering angle is also calculated by differentiating the relative steering angle from the obtained neutral point. A steering angle usage function, such as a handle return control, is precisely operated from the evaluated absolute steering angle and the estimated value reliability coefficient evaluated from the reliability coefficient.

Hereinafter, embodiments of the present invention will be described with reference to the drawings.

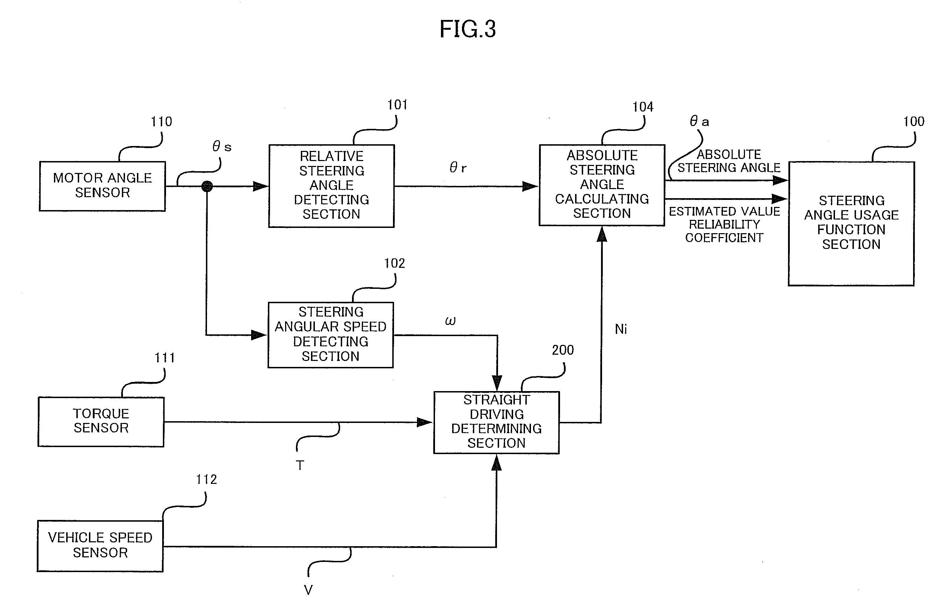

FIG. 3 shows one embodiment of the present invention, wherein an electric power steering apparatus is provided with a motor angle sensor 110 for detecting a motor angle $\theta_s$, a torque sensor 111 for detecting a steering torque T applied to a steering shaft, and a vehicle speed sensor 112 for detecting a vehicle speed V of a vehicle. The motor angle $\theta_s$ from the motor angle sensor 110 is inputted to a relative steering angle detecting section 101 and a steering angular speed detecting section 102, and the steering torque T from the torque sensor 111 and the vehicle speed V from the vehicle speed sensor 112 are inputted to a straight driving determining section 200. In addition, since an acceleration sensor is mounted depending on the vehicles and an acceleration signal in front-back directions is obtained, it is also possible to obtain the vehicle speed V by obtaining the signal to integrate it via CAN (Controller Area Network) or the like.

The relative steering angle detecting section 101 detects a relative steering angle $\theta_r$ of a steering in consideration of a gear ratio based on the motor angle $\theta_s$, and the steering angular speed detecting section 102 differentiates the motor angle $\theta_s$ to then detect a steering angular speed $\omega$ in consideration of the gear ratio. The steering angular speed $\omega$ detected by the steering angular speed detecting section 102 is inputted to the straight driving determining section 200, and a straight driving determination signal Ni calculated by the straight driving determining section 200 is inputted to an absolute steering angle calculating section 104. Meanwhile, the steering angular speed $\omega$ may be the motor angular speed as it is.

After an ignition key is turned-on and the output of the motor angle $\theta_s$ is started from the motor angle sensor 110, the relative steering angle detecting section 102 integrates the motor angle $\theta_s$ to thereby detect the relative steering angle $\theta_r$ of a handle in consideration of the gear ratio, and the steering angular speed detecting section 102 detects the steering angular speed $\omega$. The absolute steering angle calculating section 104 detects an absolute steering angle $\theta_a$ and an estimated value reliability coefficient Di based on the relative steering angle $\theta_r$ and the straight driving determination signal Ni. A steering angle usage function section 100 for inputting the absolute steering angle $\theta_a$ and the estimated value reliability coefficient Di performs a handle return control using a steering angle, a steering angle adjusting function to a vehicle behavior, or the like.

The straight driving determining section 200 has a function to determine that the vehicle is being straightly driven when the steering angular speed $\omega$ and a steering torque Tr are thresholds or less determined to be neutral, and the state of the vehicle speed V or more on which a self-aligning torque (SAT) acts continues for a certain time period (t) or more.

The absolute steering angle calculating section 104 calculates the absolute steering angle by performing the estimation of a neutral point angle and the calculating of the following Equation-1.

[Equation-1]

$$\text{absolute steering angle} = \text{relative steering angle}$$

$$- \text{estimated neutral point angle}$$

The absolute steering angle $\theta_a$ calculated by the absolute steering angle calculating section 104 is used in the steering angle usage function section 100, while the estimated value reliability coefficient Di has the following meaning. Namely, since the absolute steering angle $\theta_a$ in the present invention is estimated from a vehicle information, the reliabilities for precision between the estimation initial stage and the sufficient estimation completion are different. Depending on the functions to use the absolute steering angle $\theta_a$, it may be safer to reduce the effects of the functions before the sufficient estimation is performed. For such functions, the reliability coefficient of an estimated value is given and the control according thereto can be performed. For example, in the output of the handle return control, it is made small when the estimated value reliability coefficient Di is low, and it is made large when it is high.

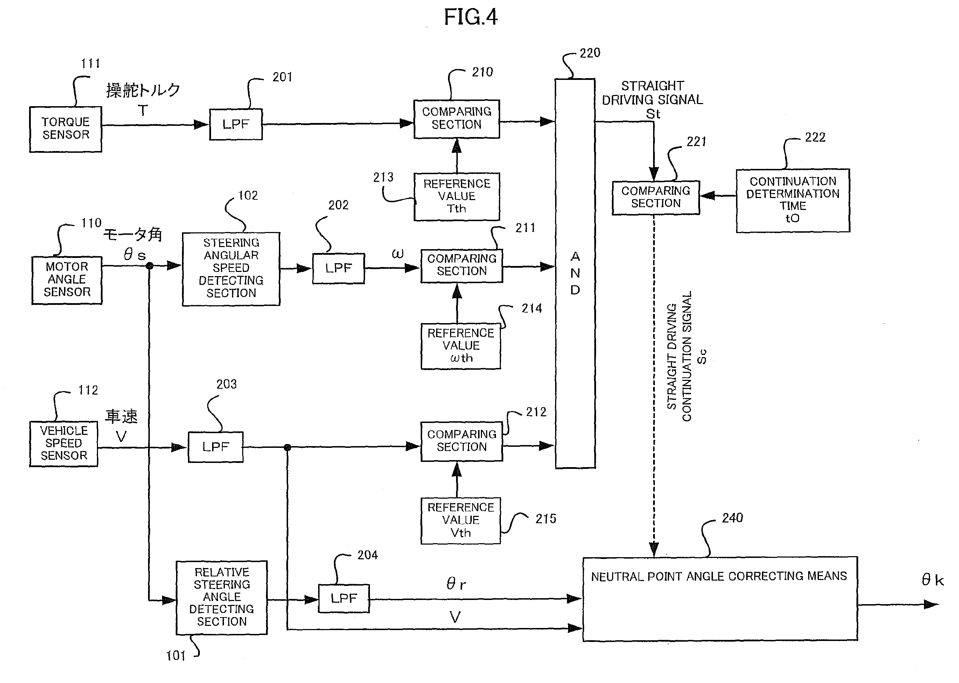

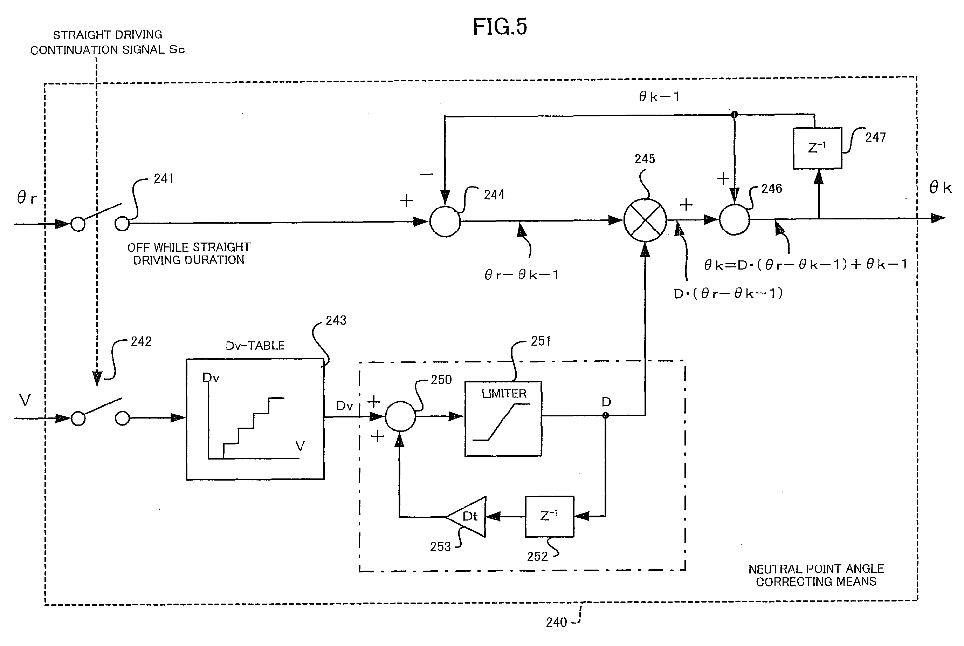

Details of the straight driving determining section 200 will be described with reference to FIGs. 4 and 5.

In FIG. 4, first, the inputted steering torque T and vehicle speed V are inputted to low pass filters (LPF) 201 and 203, respectively. Additionally, the motor angle $\theta_s$ is inputted to the steering angular speed detecting section 102, and also inputted to a neutral point angle correcting means 240 through the relative steering angle detecting section 101 and a low pass filter (LPF) 204. Incidentally, the low pass filters 201 to 204 are not essential components.

Next, the values of the steering torque T, the motor angular speed ω and the vehicle speed V are compared with a reference value Tth, a reference value ωth and a reference value Vth at comparing sections 210, 211 and 212 respectively, and the determination of the straight driving of the vehicle is performed base on an AND-condition of the each value comparison result, and then a straight driving signal St is outputted when it is determined to be the straight driving.

The steering torque T through the low pass filter 201 is inputted to the comparing section 210, and the comparing section 210 outputs the result of having compared the steering torque T with the reference value Tth set in a setting section 213. That is, the vehicle is being driven straightly in many cases when the steering torque T is smaller than the reference value Tth, and a logical value "1" is outputted, for example. The motor angular speed ω is inputted to the comparing section 211 through the low pass filter 202, and the comparing section 211 outputs the result of having compared the motor angular speed ω with the reference value ωth set in a setting section 214. That is, the vehicle is being driven straightly in many cases when the motor angular speed ω is smaller than the reference value ωth, and a logical value "1" is outputted. The vehicle speed V through the low pass filter 203 is inputted to the comparing section 212, and the comparing section 212 outputs the result of having compared the vehicle speed V with the reference value Vth set in a setting section 215. That is, the vehicle is being driven straightly in many cases when the vehicle speed V is larger than the reference value Vth, and a logical value "1" is outputted.

Subsequently, the AND-conditions of the full output of the comparing sections 210 to 212 are taken in an AND-circuit 220, and the resulting straight driving signal St comprehensively determined is outputted. That is, when all the output of the comparing sections 210 to 212 is a logical value "1", the vehicle is determined to be the straight driving and the straight driving signal St of a logical value "1" is outputted, and other than that, the vehicle is determined not to be the straight driving and the straight driving signal St of a logical value "0" is outputted.

The straight driving signal St is inputted to a comparing section 221, and the comparing section 221 determines whether or not the vehicle continues the straight driving, and thereby outputs a straight driving continuation signal Sc when the logical value "1" of the straight driving signal St continues for a continuation determination time t0 or more set in a setting section 222. The straight driving continuation signal Sc is inputted to a neutral angle correcting means 240.

Next, the neutral point angle correcting means 240 will be described with reference to FIG. 5.

First, the relative steering angle $\theta_r$ outputted from the low pass filter 204 via the relative steering angle detecting section 101, the vehicle speed V outputted from the low pass filter 203, and the straight driving continuation signal Sc from the comparing section 221 are inputted to the neutral point angle correcting means 240. However, it is necessary to perform a neutral angle correction under the condition that the vehicle is being driven straightly. Hence, a switch 241 for imposing the condition is disposed between the low pass filter 204 and a subtracting section 244, and a switch 242 is disposed between the low pass filter 203 and a Dv-table 243. The switches 241 and 242 are then closed only while the straight driving continuation signal Sc exists.

Estimation of a neutral point steering angle is performed based on the following Equation-2, and the neutral point angle correcting means 240 performs the following Equation-2.

[Equation-2]

$$\theta_k = (\theta_r - \theta_{k-1}) \cdot D + \theta_{k-1}$$

Here, "$\theta_{k-1}$" is the neutral point angle having estimated last time, and "$\theta_k$" is a new neutral point angle estimated this time. Additionally, "D" is a reliability coefficient, which is fundamentally increased as the vehicle speed V increases.

Next, a neutral point angle correction will be described with reference to FIG. 5.

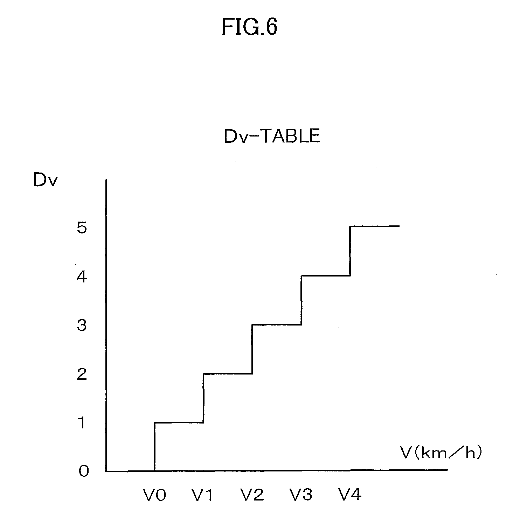

The vehicle speed V inputted via the switch 242 is inputted to the Dv-table 243. The Dv-table 243 is composed of a reliability basic coefficient Dv which increases as the vehicle speed V increases, and fundamentally, a reliability coefficient D increases as the reliability basic coefficient Dv increases. Here, an example of the Dv-table will be shown in FIG. 6.

If the vehicle speed V is inputted to the Dv-table 243, the reliability basic coefficient Dv is outputted according to the function of FIG. 6. The outputted reliability basic coefficient Dv is inputted as one of added values of an adding section 250. The output of the adding section 250 is inputted to a limiter 251, and the output of the limiter 251, namely, the reliability coefficient D is controlled within a setting value. The reliability coefficient D outputted from the limiter 251 is inputted to a delay element 252 ($Z^{-1}$), the output of the delay element 252 is multiplied by a gain (253) Dt, and the multiplied result is inputted to the adding section 250 to thereby be added to the reliability basic coefficient Dv from the Dv-table 243 in the adding section 250. Thus, the reliability basic coefficient Dv with respect to the vehicle speed V is integrated, allowing the reliability coefficient D to be calculated. The reliability coefficient D is inputted also to a multiplying section 245.

The relative steering angle $\theta_r$ inputted to the neutral point angle correcting means 240 is inputted to a subtracting section 244, and the neutral point angle $\theta_{k-1}$ outputted from a delay element 247 and estimated last time is also inputted to the subtracting section 244. As a result, the output of the subtracting section 244 will result in a deviation $(\theta_r - \theta_{k-1})$. The deviation from the subtracting section 244 is multiplied with the reliability coefficient D from the limiter 251 in the multiplying section 245, and then the multiplied value "$D \cdot (\theta_r - \theta_{k-1})$" is outputted from the multiplying section 245. Subsequently, "$D \cdot (\theta_r - \theta_{k-1})$" outputted from the multiplying section 245 is inputted to the adding section 246 to thereby be added to the neutral point angle $\theta_{k-1}$ outputted from the delay element 247 and estimated last time, and a value "$D \cdot (\theta_r - \theta_{k-1}) + \theta_{k-1}$" is then outputted as the calculated result. This output value will result in an estimated new neutral point angle $\theta_k$, which is expressed with the following Equation-3.

[Equation-3]

$$\theta_k = D \cdot (\theta_r - \theta_{k-1}) + \theta_{k-1}$$

This neutral point angle $\theta_k$ will result in an output of the neutral point angle correcting means 240.

An integration by the calculation "$D \cdot (\theta_r - \theta_{k-1})$" is performed only when the straight driving continuation signal Sc exists, namely, only for the straight driving duration. Meanwhile, if the straight driving continuation signal Sc is lost, the duration time t is reset to "0". Meanwhile, if the straight driving continuation signal Sc is lost, the neutral point angle $\theta_k$ as the calculated result is memorized in a memory means such as RAM, which is used as an off-set initial value $\theta_{k-1}$ when the straight driving continuation signal Sc is outputted again next time to be started the calculating by the neutral point angle correcting means 240.

As mentioned above, the straight driving determining section 200 calculates by considering the relative steering angle $\theta_r$ when the vehicle is determined to be the straight driving as a neutral point, and as the calculation method of the neutral point angle, the deviation "$(\theta_r - \theta_{k-1})$" detected by the neutral angle $\theta_{k-1}$ amended last time and a newly obtained relative steering angle $\theta_r$ is multiplied with the reliability coefficient D(V, t), and thereby the value "$D \cdot (\theta_r - \theta_{k-1})$" is obtained. The neutral point angle $\theta_{k-1}$ corrected last time is added to the value D, and a new neutral point angle $\theta_k$ is calculated according to the Equation-3.

The reliability coefficient D(V, t) is calculated by integrating the vehicle speed reliability Dv depending on the vehicle speed V by the duration time, if the straight driving duration (t) becomes the threshold or more. Since the relative steering angle falling under the conditions during high speed driving is considered to be a reliable value, the reliability coefficient D becomes large by setting the vehicle speed reliability Dv high, and also the reliability coefficient D increases as the duration longer, and the relative steering angle is immediately reflected to the neutral point angle.

Additionally, since the initial value at the start of the estimation has the possibility of incorrect estimation, an estimated value reliability coefficient Dest obtained by integrating the reliability coefficient D is set as the reliability of the estimated value so that the function using the steering angle may not function before the estimation continues for a certain time period or more. If the estimated value reliability coefficient Dest becomes the threshold or more, the precision of the neutral point is determined to be improved, and then the reliability coefficient D is made smaller at a certain rate so that the neutral point angle may not change sharply. In addition, the estimated value reliability coefficient Dest is outputted outside a module for the operating conditions and gains of the function which uses the absolute steering angle.

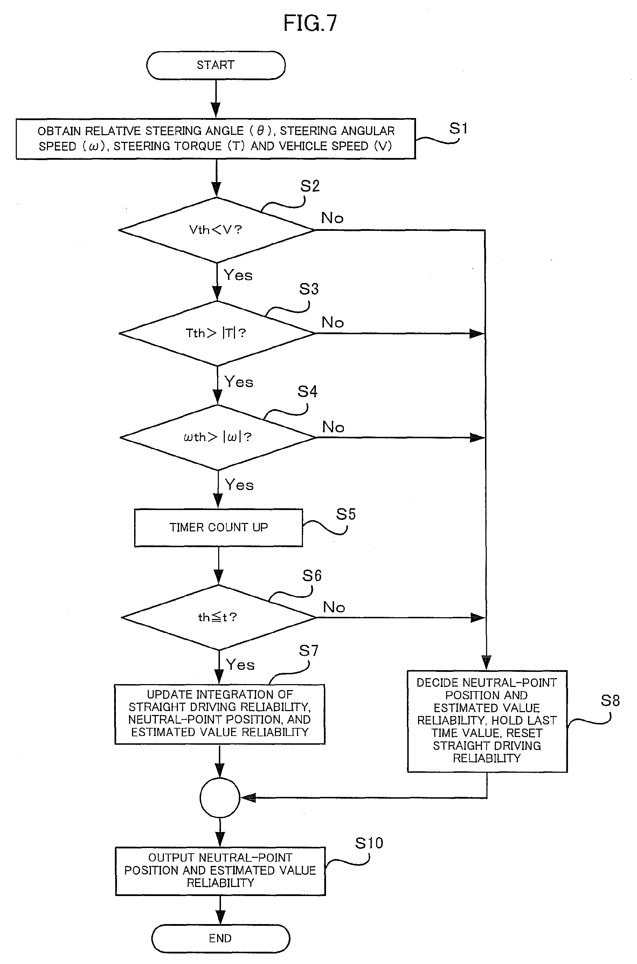

The above-mentioned operation is performed according to the flow chart shown in FIG. 7.

Namely, the relative steering angle $\theta_r$, the steering angular speed $\omega$, the steering torque T and the vehicle speed V are obtained as described above (Step S1), and whether or not the vehicle speed V is larger than the vehicle speed threshold Vth is determined (Step S2), and then if the vehicle speed V is the vehicle speed threshold Vth or less, a neutral point position and an estimated value reliability is decided, and then the straight driving reliability is reset while holding the last time value (Step S8). In the above-mentioned Step S2, when the vehicle speed V is larger than the vehicle speed threshold Vth, whether or not an absolute value |T| of the steering torque T is smaller than the threshold Tth is determined (Step S3), and then, when the absolute value |T| I of the steering torque T equal to the threshold Tth or more, the program proceeds to the above-mentioned Step S8, or when the absolute value |T| of the steering torque is smaller than the threshold Tth, whether or not an absolute value |ω| of the steering angular speed ω is smaller than a threshold ωth is further determined (Step S4). Subsequently, when the absolute value |ω| of the steering angular speed ω is the threshold ωth or more, the program proceeds to the above-mentioned Step S8, or when the absolute value |ω| of the steering angular speed ω is smaller than the threshold ωth, a timer counts up (Step S5), and then whether or not count time t becomes a threshold th or more (Step S6). When the count time t of the timer is smaller than the threshold th, the program proceeds to the above-mentioned Step S8, whereas when the count time t of the timer becomes the threshold th or more, update of the integration of the straight driving reliability, the neutral position and estimated value reliability is performed (Step S7). Subsequently, the neutral point position and the estimated value reliability are outputted, and the program ends (Step S10).

Next, other embodiments of the present invention will be described.

In a case that a wheel rotational speed can be used, a higher-precision estimation can be performed by adding the wheel rotational speed to a straight driving determination condition of the above-mentioned estimation method. The determination conditions with the wheel rotational speed are as follows. Since the speed difference between the right wheels and the left ones is "0" in the state of an ideal straight driving, the right-and-left wheel speed can be determined under the same conditions. However, since the wheel speed difference greatly differs in a value depending on the vehicle speed, the threshold with respect to the wheel speed difference is not provided, but the following relational expression based on a turning radius is used.

[Equation-4]

$$\tan\theta = k_1 \frac{\psi_l - \psi_r}{\psi_l + \psi_r} \quad \Rightarrow \quad \left| k_1 \frac{\psi_l - \psi_r}{\psi_l + \psi_r} \right| \le k_2$$

$$\left| \psi_l - \psi_r \right| \le \frac{k_2}{k_1} \left| \psi_l + \psi_r \right|$$

$$0 \le \frac{k_2}{k_1} \left| \psi_l + \psi_r \right| - \left| \psi_l - \psi_r \right|$$

$\psi_1$: left rear wheel speed, $\psi_r$: right rear wheel speed.

In the above Equation-4, the steering angle θ, the left rear wheel speed $\psi_i$ and the right rear wheel speed $\psi_r$ are expressed with the following Equation-5 by making $k_1$ into a constant.

[Equation-5]

$$\tan\theta = k_1 \cdot (\Psi_i - \Psi_r)/(\Psi_i + \Psi_r)$$

Since the vehicle is then considered to be the straight driving when the steering angle θ is small, whether or not the value of a right-hand side of the above Equation-5 is the threshold or less is determined, but if "tan" of a trigonometric function or a division occurs, the calculating in CPU or MPU is difficult. For this reason, in the present invention, the Equation-5 is changed into the following Equation-6 by making $k_2$ into a constant.

[Equation-6]

$$0 \le k_2/k_1 \cdot \left| \Psi_i + \Psi_r \right| - \left| \Psi_i - \Psi_r \right|$$

From the above Equation-6, if the value of a right-hand side is zero or more, the vehicle is determined to be the straight driving.

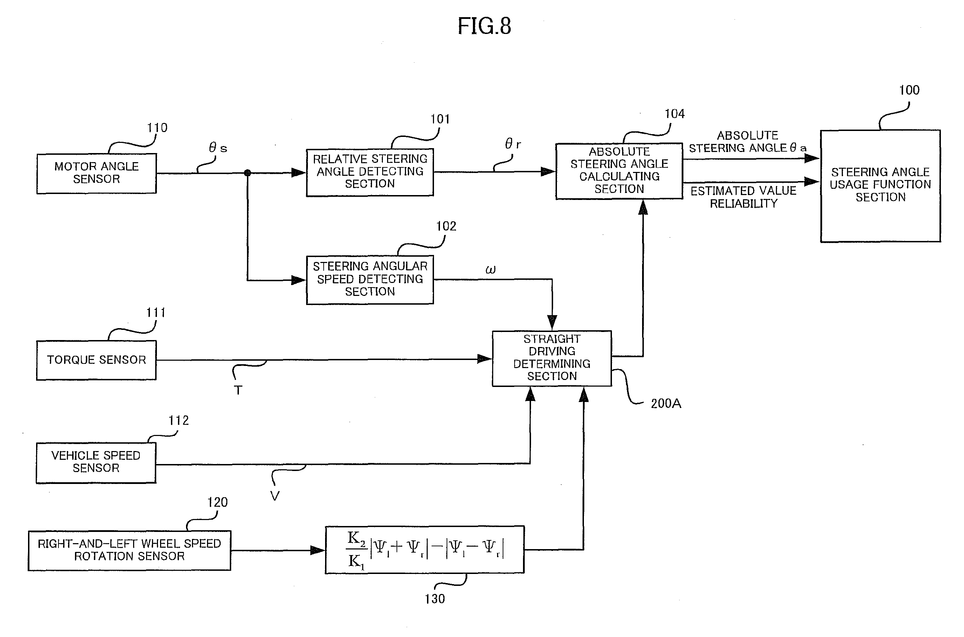

An example of a control unit in using the right-and-left wheel rotational speed is shown in FIG. 8 corresponding to FIG. 3. In this embodiment, a right-and-left wheel speed rotation sensor 120 is provided, the output from a calculating section 130 which processes a wheel speed rotation signal is inputted to a neutral point detecting section 200A, allowing the straight driving of the vehicle to be determined more precisely. Namely, in the embodiment of FIG. 8, a calculating section 130 which performs the conditions of the Equation-6 is added to the straight driving determination by the straight driving determining section 200A, and the configuration of FIG. 8 is completely the same as that of FIG. 3, other than the calculating section 130.

Thus, when the right-and-left wheel rotational speed is used, the absolute steering angle can be more precisely estimated.

In the control unit of the electric power steering apparatus according to the present invention, highly precise estimation of the neutral point can be performed by using the steering angular speed for the straight driving determination, and further using the torque sensor and the vehicle speed sensor, as well as using an algorithm for the calculating of the absolute steering angle. Additionally, by adding the wheel rotational speed when the straight driving determination is performed, earlier and assured estimation can be performed.

**Claims**

1. A control unit of an electric power steering apparatus for driving a motor via a current control section with a current command value calculated by a torque control section and giving an assist torque to a steering mechanism by driving the motor, the control unit comprising:

   a motor angle sensor for detecting a motor angle;
   a torque sensor for detecting a steering torque applied to a steering shaft;
   a relative steering angle detecting section for detecting a relative steering angle $\theta_r$ of a steering from an output of the motor angle sensor;
   a steering angular speed detecting section for detecting an angular speed of the motor;
   a vehicle speed determining section for determining a vehicle speed;
   a neutral point calculating section for determining a straight driving of a vehicle based on the steering angular speed, the steering torque and the vehicle speed, and calculating by considering that the relative steering angle $\theta_r$ when the straight driving continues for a predetermined time or more is a neutral point; and
   an absolute steering angle calculating section for calculating an absolute steering angle with a difference between the neutral point obtained by the neutral point calculating section and the relative steering angle $\theta_r$.

2. A control unit of an electric power steering apparatus according to claim 1, wherein the neutral point calculating section sets a reliability coefficient which increases according to the vehicle speed and a straight driving duration if the straight driving duration becomes a first threshold or more under conditions of determining the straight driving of the vehicle, and sets a value "$D \cdot (\theta_r - \theta_{k-1})$" obtained by multiplying a deviation between the neutral point angle $\theta_{k-1}$ corrected last time and the relative steering angle $\theta_r$ by a reliability coefficient D is added to the neutral point angle $\theta_{k-1}$ corrected last time as a new neutral point angle $\theta_k$.

3. A control unit of an electric power steering apparatus according to claim 2, wherein an estimated value reliability coefficient obtained by integrating the reliability coefficient D is set, and when the estimated value reliability coefficient becomes a second threshold or more, the reliability coefficient D is decreased to reduce an corrected displacement of the neutral point angle $\theta_k$.

4. A control unit of an electric power steering apparatus according to claim 1, wherein the straight driving determination is performed by adding a wheel rotational speed thereto.

5. A vehicle that mounts the control unit of the electric power steering apparatus according to any one of claims 1 to 4.

# FIG.1

FIG.2

# FIG.3

FIG.4

θk

222 CONTINUATION DETERMINATION TIME tO

STRAIGHT DRIVING SIGNAL St

221 COMPARING SECTION

STRAIGHT DRIVING CONTINUATION SIGNAL Sc

220 AND

240 NEUTRAL POINT ANGLE CORRECTING MEANS

210 COMPARING SECTION

213 REFERENCE VALUE Tth

211 COMPARING SECTION

214 REFERENCE VALUE ωth

212 COMPARING SECTION

215 REFERENCE VALUE Vth

201 LPF

202 LPF

ω

102 STEERING ANGULAR SPEED DETECTING SECTION

203 LPF

204 LPF

θr

V

111 TORQUE SENSOR

操舵トルク T

110 MOTOR ANGLE SENSOR

モータ角 θs

112 VEHICLE SPEED SENSOR

車速 V

101 RELATIVE STEERING ANGLE DETECTING SECTION

FIG.5

NEUTRAL POINT ANGLE CORRECTING MEANS

STRAIGHT DRIVING CONTINUATION SIGNAL Sc

OFF WHILE STRAIGHT DRIVING DURATION

$\theta r$

$V$

$\theta k$

$\theta k-1$

$\theta r - \theta k-1$

$\theta k = D \cdot (\theta r - \theta k-1) + \theta k-1$

$D \cdot (\theta r - \theta k-1)$

241

242

243  Dv-TABLE

244

245

246

247  $Z^{-1}$

250

251  LIMITER

252  $Z^{-1}$

253  Dt

240

Dv

D

FIG.6

Dv-TABLE

# FIG.7

```
                    ( START )
                        │
                        ▼
┌────────────────────────────────────────────┐
│ OBTAIN RELATIVE STEERING ANGLE (θ), STEERING │   S1
│ ANGULAR SPEED (ω), STEERING TORQUE (T) AND   │
│ VEHICLE SPEED (V)                            │
└────────────────────────────────────────────┘
                        │
                        ▼          S2
                   ╱─────────╲         No
                  ╱  Vth<V ?  ╲───────────────────┐
                   ╲─────────╱                     │
                        │ Yes                       │
                        ▼          S3               │
                   ╱─────────╲         No           │
                  ╱  Tth>|T|? ╲──────────────────┐  │
                   ╲─────────╱                    │  │
                        │ Yes                      │  │
                        ▼          S4              │  │
                   ╱─────────╲         No          │  │
                  ╱  ωth>|ω|? ╲─────────────────┐  │  │
                   ╲─────────╱                   │  │  │
                        │ Yes                     │  │  │
                        ▼                          │  │  │
          ┌──────────────────────┐   S5            │  │  │
          │   TIMER COUNT UP      │                 │  │  │
          └──────────────────────┘                 │  │  │
                        │                           │  │  │
                        ▼          S6                │  │  │
                   ╱─────────╲         No            │  │  │
                  ╱  th≦t ?   ╲───────────────────┐  │  │  │
                   ╲─────────╱                    │  │  │  │
                        │ Yes         S7           │  │  │  │
                        ▼                           ▼  ▼  ▼  ▼
          ┌──────────────────────┐   ┌──────────────────────────┐
          │ UPDATE INTEGRATION OF │   │  DECIDE NEUTRAL-POINT     │
          │ STRAIGHT DRIVING      │   │  POSITION AND ESTIMATED   │  S8
          │ RELIABILITY, NEUTRAL- │   │  VALUE RELIABILITY, HOLD  │
          │ POINT POSITION, AND   │   │  LAST TIME VALUE, RESET   │
          │ ESTIMATED VALUE       │   │  STRAIGHT DRIVING         │
          │ RELIABILITY           │   │  RELIABILITY              │
          └──────────────────────┘   └──────────────────────────┘
                        │                           │
                        ▼                           │
                       (○)◄─────────────────────────┘
                        │
                        ▼
          ┌──────────────────────┐   S10
          │ OUTPUT NEUTRAL-POINT  │
          │ POSITION AND ESTIMATED│
          │ VALUE RELIABILITY     │
          └──────────────────────┘
                        │
                        ▼
                    ( END )
```

# FIG.8

MOTOR ANGLE SENSOR [110]

$\theta s$

RELATIVE STEERING ANGLE DETECTING SECTION [101]

$\theta r$

ABSOLUTE STEERING ANGLE CALCULATING SECTION [104]

ABSOLUTE STEERING ANGLE $\theta a$

ESTIMATED VALUE RELIABILITY

STEERING ANGLE USAGE FUNCTION SECTION [100]

STEERING ANGULAR SPEED DETECTING SECTION [102]

$\omega$

TORQUE SENSOR [111]

T

STRAIGHT DRIVING DETERMINING SECTION [200A]

VEHICLE SPEED SENSOR [112]

V

RIGHT-AND-LEFT WHEEL SPEED ROTATION SENSOR [120]

$$\frac{K_2}{K_1}|\Psi_1 + \Psi_r| - |\Psi_1 - \Psi_r|$$ [130]

EP 1 944 221 A1

**INTERNATIONAL SEARCH REPORT**

| International application No. |
| --- |
| PCT/JP2006/320790 |

A. CLASSIFICATION OF SUBJECT MATTER
*B62D6/00(2006.01)i, B62D5/04(2006.01)i*

According to International Patent Classification (IPC) or to both national classification and IPC

B. FIELDS SEARCHED

Minimum documentation searched (classification system followed by classification symbols)
B62D6/00, B62D5/04

Documentation searched other than minimum documentation to the extent that such documents are included in the fields searched
Jitsuyo Shinan Koho         1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2003-276635 A  (Koyo Seiko Co., Ltd.),<br>02 October, 2003 (02.10.03),<br>Full text; all drawings<br>(Family: none) | 1,4,5<br>2,3 |
| Y<br>A | JP 2005-88709 A  (Kabushiki Kaisha Fabesuto),<br>07 April, 2005 (07.04.05),<br>Claim 2; Fig. 2<br>(Family: none) | 1,4,5<br>2,3 |
| Y<br>A | JP 2003-40131 A  (NSK Ltd.),<br>13 February, 2003 (13.02.03),<br>Par. Nos. [0025] to [0027]; Fig. 4<br>(Family: none) | 1,4,5<br>2,3 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>17 November, 2006 (17.11.06) | Date of mailing of the international search report<br>28 November, 2006 (28.11.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/320790 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2002-225740 A  (Visteon Global Technologies, Inc.), 14 August, 2002 (14.08.02), Full text; all drawings & US 2004/0032723 A1    & GB 2370260 A & WO 2004/023264 A2    & DE 10161619 A | 1-5 |
| A | JP 2002-2516 A  (NSK Ltd.), 09 January, 2002 (09.01.02), Full text; all drawings (Family: none) | 1-5 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003276635 A